**Europäisches Patentamt**

**European Patent Office**

**Office européen des brevets**

(11) Veröffentlichungsnummer : **0 133 278**
**B1**

(12) **EUROPÄISCHE PATENTSCHRIFT**

(45) Veröffentlichungstag der Patentschrift :
28.09.88

(21) Anmeldenummer : 84108752.1

(22) Anmeldetag : 24.07.84

(51) Int. Cl.⁴ : **H 04 B 17/00, H 04 J 3/14**

(54) Verfahren und Anordnung zur Überwachung von Digital-Richtfunkstrecken.

(30) Priorität : 29.07.83 DE 3327517

(43) Veröffentlichungstag der Anmeldung :
20.02.85 Patentblatt 85/08

(45) Bekanntmachung des Hinweises auf die Patenterteilung : 28.09.88 Patentblatt 88/39

(84) Benannte Vertragsstaaten :
AT CH DE GB LI NL

(56) Entgegenhaltungen :
AT-B- 351 601
DE-B- 2 647 716
US-A- 4 301 538
TELCOM-REPORT, 5. Jahrgang, Heft 2, April 1982,
Siemens AG., Berin, München HANS-OTTO SIMON,
WOLFGANG ULMER "DRS 34/1900 - ein Digitalrichtfunksystem zur Signalübertragung mit 34 Mbit/s"
Seiten 138-144

(73) Patentinhaber : Siemens Aktiengesellschaft Berlin
und München
Wittelsbacherplatz 2
D-8000 München 2 (DE)

(72) Erfinder : Barth, Hermann, Dipl.-Ing.
Forstenrieder-Allee 236
D-8000 München 71 (DE)
Erfinder : Kahn, Klaus-Dieter, Dipl.-Ing.
Frühlingstrasse 26
D-8034 Germering (DE)
Erfinder : Kühne, Friedrich, Dr.-Ing.
Gabriele-Münter-Strasse 21
D-8000 München 71 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung bezieht sich auf eine Anordnung zur Überwachung von Digital-Richtfunkstrecken mit zwei Endstellen und wenigstens einer zwischen diesen angeordneten Zwischenstelle mit einem Empfangs- und einem Sendeteil mittels Zusatzbits, deren Anordnung durch einen Überrahmen bestimmt ist und wobei bei einem in einer Zwischenstelle festgestellten Ausfall der Verbindung der Überrahmen neu gebildet, alle Informationsbits auf den logischen Wert 1 gesetzt und die Informationsbits verwürfelt werden und der Ausfall der Verbindung mittels eines Dienstbits im neugebildeten Überrahmen an die nachfolgenden Zwischenstellen weitergemeldet wird.

In Digital-Richtfunkstrecken mit zwei Endstellen und einer oder mehreren Zwischenstellen werden im Endstellensender Zusatzbits in das zu übertragende Digitalsignal eingefügt, die im Endstellenempfänger wieder entfernt werden. Diese Zusatzbits sind Rahmenkennungsbits, Paritätsbits und Dienstbits. Die Anordnung der Zusatzbits ermöglichen den Zwischen- und Endstellenempfängern, sich auf den Überrahmen aufzusynchronisieren und die Paritäts- und Dienstbits auszuwerten. Die Paritätsbits überwachen die Übertragungsqualität. Die Dienstbits übertragen interne Hilfssignale. In solchen Systemen ist es erforderlich, die einzelnen Funkfelder und die gesamte Verbindung zu überwachen und in geeigneter Weise Alarme zu melden.

Ein Richtfunksystem mit Überrahmen ist in der Zeitschrift telcom report 5 (1982), Heft 2, Seiten 138 bis 144 beschrieben. In diesem System wird im Endstellensender der Überrahmen gebildet, wodurch das Digitalsignal D2 in ein Digitalsignal D1 mit Zusatzbits transformiert wird. Die Zwischenstellenempfänger synchronisieren sich auf den Überrahmen, werten die Zusatzbits aus und geben das Digitalsignal D1 an den Zwischenstellensender ab, der es nach Differenzcodierung und Modulation weiter überträgt.

Im Endstellenempfänger werden die Zusatzbits ausgewertet und aus dem Digitalsignal D1 entfernt, sodaß das ursprüngliche Digitalsignal D2 wieder entsteht. Stellt die Überwachung im Empfänger der Endstelle einen Ausfall fest, so gibt dieser ein Dauer-Eins-Signal mit der Bitrate des Digitalsignals D2 ab, das sogenannte AIS-Signal (Alarm Indication Signal). Das AIS-Signal, das in der Zeitschrift « Der Fernmelde-Ingenieur » 30 (1976), Heft 8, Seiten 11 bis 14 näher erläutert ist, zeigt allen folgenden Übertragungs- und Multiplexeinrichtungen an, daß die Verbindung gestört ist und daß der Ausfall bereits gemeldet ist. Die folgenden Übertragungs- und Multiplexeinrichtungen geben deshalb keinen Unterbrechungsalarm ab. Die digitale Signalaufbereitung erfolgt dabei nur an den Endstellen. An Zwischenstellen dagegen wird mit der um die Zusatzbits erhöhten Bitrate durchgeschaltet, woraus für diese ein kleinerer Aufwand resultiert.

Am Eingang des Endstellensenders wird das ankommende Digitalsignal D2 überwacht. Bei einem Ausfall des Signals D2 sendet der Endstellensender ein Signal D1 mit Zusatzbits, in dem alle Informationsbits den logischen Wert 1 haben. Auf diese Weise entsteht kein weiterer Alarm und der Endstellensender gibt automatisch ein Dauer-Eins-Signal ab.

Von Nachteil ist bei dem bekannten Verfahren, daß bei einem Ausfall innerhalb der Richtfunkverbindung die Überwachungen aller folgender Zwischenstellenempfänger ansprechen, sodaß Alarme auch in den Stationen gemeldet werden, in denen kein Ausfall aufgetreten ist.

Durch die DE-B 26 47 716 sind ein Verfahren zur Überwachung einzelner, jeweils zwischen zwei außerhalb beider Leitungsendgeräte definierter Schnittstellen liegender Streckenabschnitte eines Zeitmultiplexsystems für digitale, insbesondere pulscodemodulierte Signale und eine Anordnung zur Durchführung dieses Verfahrens bekannt. Dabei werden die Nachrichtensignale zusammen mit einem Rahmenkennungswort als Multiplexsignal übertragen.

Bei jedem Streckenabschnitt wird im eingangsseitigen Leitungsendgerät ein Teil des Rahmenkennungswortes neu eingefügt und im ausgangsseitigen Leitungsendgerät ausgewertet. Beim Auftreten eines das gesamte Multiplexsignal einschließlich Rahmenkennungswort betreffenden Fehlers wird an der nächsten Schnittstelle das gesamte Multiplexsignal durch ein AIS-Signal (Alarm Indication Signal) ersetzt. Im folgenden eingangsseitigen Leitungsendgerät wird ein Rahmenkennungs-Wortteil eingesetzt und von diesem Leitungsendgerät zum ausgangsseitigen Leitungsendgerät eine AIS-Meldung übertragen, die die erneute Einspeisung eines AIS-Signals anstelle des gesamten Multiplexsignals vor der nächsten Schnittstelle auslöst. Dieser Vorgang wiederholt sich in allen weiteren Streckenabschnitten. Bei AIS-Meldung tritt an die Stelle des Rahmenkennungs-Wortteiles ein anderer zweiter Rahmenkennungs-Wortteil, der während einer AIS-Meldung zusätzlich der Synchronisation dient.

Ferner ist durch die US-A-4 301 538 eine Fernüberwachungs- und Fehlerortungseinrichtung für Impulswiederholungen mit Regenerierung auf einer digitalen Übertragungsstrecke bekannt, auf der Dienstsignale zu einem Digitalsignal addiert übertragen werden. Dabei enthält jede dieser Einrichtungen einen Empfänger, ein Zeitelement und einen Sender. Der Empfänger ist mit einem Eingang der Impulswiederholung mit Regenerierung verbunden zum Empfang eines Dienstsignals, sofern ein solches an seinem Eingang anliegt. Das Zeitelement enthält eine Trägerfrequenz- und Takt-Bit-Frequenzrückgewinnung. Der Sender der Fernüberwachungs- und Fehlerortungseinrichtung ist ausgangsseitig an einen zweiten Eingang der Pulswiederholung mit Regenerierung angeschlossen für die Übertragung eines Dienstsignals entsprechend dem Empfangsrahmen, zu dem die Daten addiert worden sind. Auftretende Störungen werden dabei über Signalleitungen an die betreffenden Einrichtungen weitergemeldet.

Der Erfindung liegt die Aufgabe zugrunde, eine Anordnung zur Überwachung von Digital-Richtfunkstrecken anzugeben, bei der der Alarm nur in der Station gemeldet wird, in der ein Ausfall erstmals festgestellt wird.

Diese Aufgabe wird gemäß der Erfindung in der Weise gelöst, daß in der Basisbandaufbereitung des Sendeteils der Zwischenstelle, die im Störungsfall die Funktion einer neuen Endstelle übernimmt, zwischen einer eingangsseitigen Schnittstellenbaugruppe (INTERFACE) und einem ausgangsseitigen Differenzcodierer im Signalweg ein Multiplexer zur Überrahmenbildung und ein Verwürfler eingefügt sind, die mit einer Taktzentrale zur Erzeugung eines Steuertaktes für die Überrahmenbildung verbunden sind, daß die Taktzentrale an einen Taktoszillator und die Schnittstellenbaugruppe angeschaltet und zudem mit dem Codierer verbunden ist, daß Multiplexer und Verwürfler und Taktzentrale einen Steuereingang für ein bei Ausfall anliegendes Steuersignal aufweisen, daß zwischen die Schnittstellenbaugruppe und den Multiplexer ein elastischer Speicher eingefügt ist, der einen mit der Taktzentrale verbundenen spannungsgesteuerten Oszillator steuert, und daß ferner Multiplexer und Verwürfler, Taktzentrale und Schnittstellenbaugruppe einen weiteren Steuereingang aufweisen, über den ein weiteres Steuersignal die Anordnung von Zwischenstellenbetrieb auf Endstellenbetrieb umstellt.

Nachstehend wird die Erfindung anhand von in der Zeichnung dargestellten Ausführungsbeispielen näher erläutert.

Es zeigen

Fig. 1 im Blockschaltbild eine Richtfunkstrecke aus zwei Endstellen und einer Zwischenstelle und

Fig. 2 und 3 die Basisbandaufbereitung des Sendeteils einer Zwischenstelle mit unterschiedlich ausgebildeten Einrichtungen zur Überwachung.

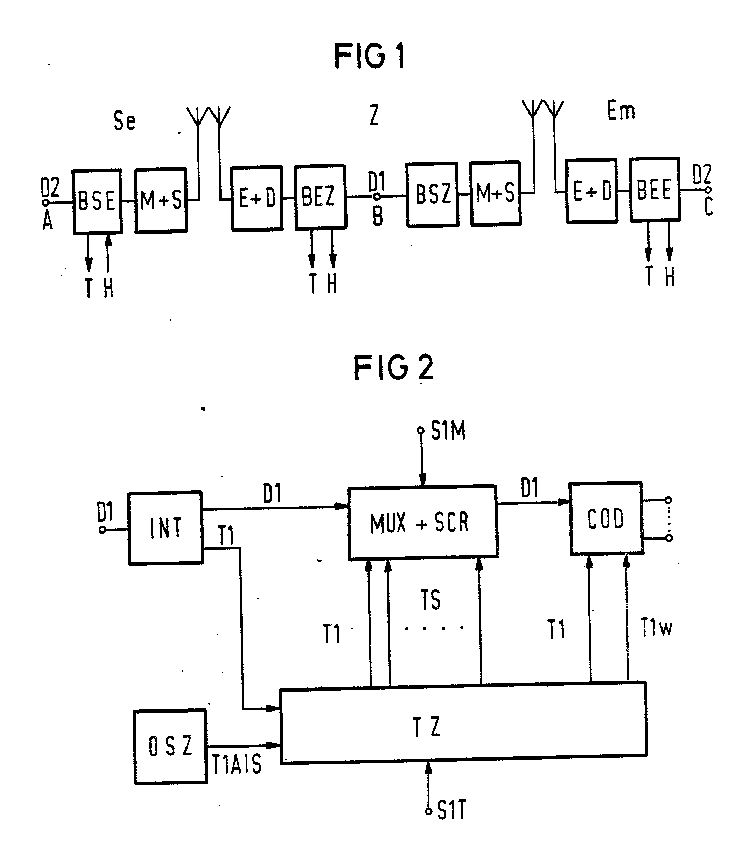

Die Richtfunkstrecke nach Fig. 1 besteht aus zwei Endstellen und einer Zwischenstelle. Der Endstellensender Se besteht dabei aus einer Basisbandaufbereitung BSE, einem Modulator M und einem Sendeteil S. Der Endstellenempfänger Em besteht aus einem Empfangsteil E, einem Demodulator D und einer Basisbandaufbereitung BEE. In der Zwischenstelle Z sind ein Zwischenstellenempfänger E und ein Zwischenstellensender S an ihren Basisbandanschlüssen verbunden. In der Basisbandaufbereitung BSE des Endstellensenders Se werden die Zusatzbits in das am Anschluß A zugeführte Digitalsignal D2 eingefügt. Das Digitalsignal mit erhöhter Bitrate wird über die Zwischenstelle Z bis zum Endstellenempfänger Em übertragen, wo die Basisbandaufbereitung BEE die Zusatzbits auswertet, aus dem Digitalsignal D1 entfernt und am Anschluß C das ursprüngliche Digitalsignal D2 abgibt. In der Zwischenstelle Z durchläuft das Digitalsignal D1 in den Basisbandaufbereitungen nur eine Differenzdecodierung in der empfangsseitigen Basisbandaufbereitung BEZ und eine Differenzcodierung in der sendeseitigen Basisbandaufbereitung BSZ. In der empfangsseitigen Basisbandaufbereitung BEZ werden außerdem in einem Nebenweg die Zusatzbits ausgewertet.

Fig. 2 zeigt die Basisbandaufbereitung BSZ des Sendeteils der Zwischenstelle Z. Die Basisbandaufbereitung eines Zwischenstellensenders enthält im Normalfall nur eine Schnittstellenbaugruppe INT und einen Differenzcodierer COD. Dabei empfängt die Schnittstellenbaugruppe INT das Digitalsignal D1 in einem Schnittstellencode, z. B. HDB3-Code (High-Density-Bipolar-Code), AMI-Code (Alternate-Mark-Inversion-Code) oder CMI-Code (Coded-Mark-Inversion) und gibt das Digitalsignal D1 in binärer Form zusammen mit dem zugehörigen Takt T1 an den Differenzcodierer ab. Der Differenzcodierer COD steuert nach Serienparallelwandlung und Differenzcodierung über zwei oder mehrere Leitungen, je nach Wertigkeit der Modulation, den Modulator an. Dazu wird noch der Worttakt T1w benötigt, der durch Teilung aus dem Takt T1 hervorgeht.

Für die erfindungsgemäße Überwachung ist vorgesehen, daß zwischen der Schnittstellenbaugruppe INT und dem Codierer COD der Basisbandaufbereitung des Zwischenstellensenders im Signalweg ein Multiplexer MUX zur Überrahmenbildung und ein Verwürfler SCR eingefügt sind sowie ferner eine Taktzentrale TZ zur Erzeugung von Steuertakten TS für die Überrahmenbildung und ein Taktoszillator OSZ zur Erzeugung eines Taktes T1 AIS vorgesehen sind. Der Taktoszillator OSZ ist dabei an die Taktzentrale TZ angeschaltet, die Taktzentrale TZ ist mit dem Multiplexer MUX und Verwürfler SCR verbunden. Multiplexer MUX und Verwürfler SCR weisen einen gemeinsamen Steuereingang S1M auf. Ein entsprechender Steuereingang S1T ist bei der Taktzentrale TZ vorgesehen. An diesen Steuereingängen liegt bei Ausfall ein von einer Überwachung abgeleitetes Steuersignal S1 an.

Nachfolgend soll die Wirkungsweise der Überwachungsschaltung beschrieben werden. Bei einem Ausfall aktiviert das Steuersignal S1 den Multiplexer MUX und den Verwürfler SCR über den gemeinsamen Steuereingang S1M in der Weise, daß ein Überrahmen neu gebildet wird, daß in die Positionen der Informationsbits der logische Wert 1 eingeschrieben wird und daß die Informationsbits verwürfelt werden.

Das Steuersignal S1 schaltet die Taktzentrale TZ von dem Steuertakt T1 aus der Schnittstellenbaugruppe INT auf den Steuertakt T1 AIS des Taktoszillators OSZ um.

Bei störungsfreiem Betrieb passiert das Digitalsignal D1 den Multiplexer MUX und den Verwürfler SCR unverändert. Die Taktzentrale TZ wird durch den Takt T1 gesteuert, von den abgeleiteten Takten wird nur der Worttakt T1w benutzt.

Im Störungsfall schaltet das Steuersignal S1 die Taktzentrale TZ auf den Oszillatortakt T1 AIS um. Dies ist notwendig, weil das Taktsignal T1 entweder nicht mehr vorhanden ist oder die Taktfrequenztoleranz nicht mehr sicher einhält. Dasselbe Steuersignal S1 aktiviert den Multiplexer MUX, der einen neuen Überrahmen erzeugt, in dem alle Informationsbits den logischen Wert 1 haben. Gleichzeitig wird auch der Verwürfler SCR aktiviert, der die Informationsbits in eine für die Übertragung geeignete Pseudo-Zufallsfolge verwürfelt.

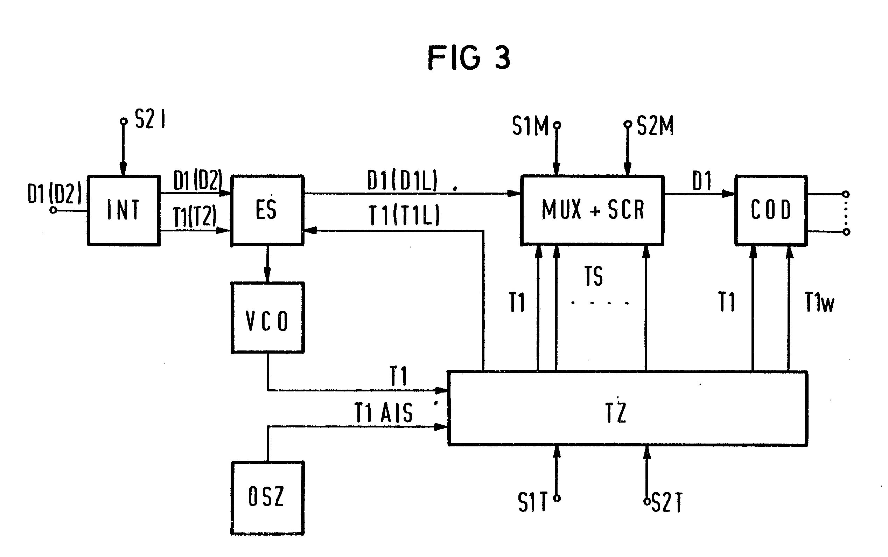

Die Schaltung nach Fig. 3 ist gegenüber der vorstehend beschriebenen Schaltung gemäß Fig. 2 dahingehend ergänzt, daß zwischen die Schnittstellenbaugruppe INT und den Multiplexer MUX ein elastischer Speicher ES eingefügt ist, der einen mit der Taktzentrale TZ verbundenen spannungsgesteuerten Oszillator VCO steuert.

Bei dieser Anordnung wird der Jitter des Taktes T1 reduziert. Jitterquellen liegen sowohl außerhalb des Senders als auch in der Schnittstellenbaugruppe INT. Die Anordnung ermöglicht es, den Jitter des gesendeten Signals soweit zu reduzieren, daß keine Beeinträchtigung der Übertragungsqualität auftritt.

Ferner ist bei der Schaltung nach Fig. 3 vorgesehen, daß der Multiplexer MUX und Verwürfler SCR sowie die Taktzentrale TZ und die Schnittstellenbaugruppe INT einen weiteren Steuereingang S2M bzw. S2T bzw. S2I aufweisen, über die ein Steuersignal S2 die Anordnung von Zwischenstellenbetrieb auf Endstellenbetrieb umstellt. Die Basisbandaufbereitung ist hierbei in Endstellen- und Zwischenstellensendern gleich. Das Steuersignal S2 stellt die Schnittstellenbaugruppe INT über den Steuereingang S2I um, sofern in den Endstellen ein anderer Schnittstellencode verwendet wird als in den Zwischenstellen. In der Fig. 3 sind die Signale bei Endstellenbetrieb in Klammern aufgeführt, soweit sie sich von den Signalen bei Zwischenstellenbetrieb unterscheiden.

Die Schnittstellenbaugruppe INT empfängt das Digitalsignal D2 und gibt es in binärer Form zusammen mit dem zugehörigen Takt T2 an den elastischen Speicher ES ab. Im elastischen Speicher findet die Bitraten-Transformation statt. Das Signal wird mit dem Lückentakt T1L der Taktzentrale TZ aus dem Speicher ES ausgelesen. Der Lückentakt T1L unterscheidet sich von dem gleichmäßigen Takt T1 dadurch, daß die Taktimpulse an den Stellen, an denen Zusatzbits eingesetzt werden sollen, unterdrückt sind. Der Lückentakt T1L wird dann von der Taktzentrale TZ geliefert, wenn sie durch das Steuersignal S2 über den Eingang S2T auf Endstellenbetrieb umgestellt worden ist. Das zum Lückentakt T1L gehörige Digitalsignal D1L wird dem Multiplexer MUX zugeführt, wo die Zusatzbits an den vorgesehenen Stellen eingefügt werden. Der nachfolgende Verwürfler SCR verwürfelt die Informationsbits und gibt das für die Übertragung geeignete Digital-Signal D1 an den Differenzcodierer COD ab.

Im Störungsfall, also bei Ausfall des Signals D2 am Eingang der Schnittstellenbaugruppe INT, schaltet das Steuersignal S1 die Taktzentrale TZ auf den internen Takt T1 AIS um und veranlaßt den Multiplexer MUX, die Informationsbits auf den logischen Wert 1 zu setzen.

**Patentanspruch**

Anordnung zur Überwachung von Digital-Richtfunkstrecken mit zwei Endstellen und wenigstens einer zwischen diesen angeordneten Zwischenstelle (Z) mit einem Empfangs- und einem Sendeteil mittels Zusatzbits, deren Anordnung durch einen Überrahmen bestimmt ist und wobei bei einem in einer Zwischenstelle festgestellten Ausfall der Verbindung der Überrahmen neu gebildet, alle Informationsbits auf den logischen Wert 1 gesetzt und die Informationsbits verwürfelt werden und der Ausfall der Verbindung mittels eines Dienstbits im neugebildeten Überrahmen an die nachfolgenden Zwischenstellen weitergemeldet wird, dadurch gekennzeichnet, daß in der Basisbandaufbereitung (BSZ) des Sendeteils der Zwischenstelle, die im Störungsfall die Funktion einer neuen Endstelle übernimmt, zwischen einer eingangsseitigen Schnittstellenbaugruppe (INTERFAGE) (INT) und einem ausgangsseitigen Differenzcodierer (COD) im Signalweg ein Multiplexer (MUX) zur Überrahmenbildung und ein Verwürfler (SCR) eingefügt sind, die mit einer Taktzentrale (TZ) zur Erzeugung eines Steuertaktes für die Überrahmenbildung verbunden sind, daß die Taktzentrale (TZ) an einen Taktoszillator (OSZ) und die Schnittstellenbaugruppe (INT) angeschaltet und zudem mit dem Codierer (COD) verbunden ist, daß Multiplexer (MUX) und Verwürfler (SCR) und Taktzentrale (TZ) einen Steuereingang (S1M, S1T) für ein bei Ausfall anliegendes Steuersignal aufweisen, daß zwischen die Schnittstellenbaugruppe (INT) und den Multiplexer (MUX) ein elastischer Speicher (ES) eingefügt ist, der einen mit der Taktzentrale (TZ) verbundenen spannungsgesteuerten Oszillator (VCO) steuert und daß ferner Multiplexer (MUX) und Verwürfler (SCR), Taktzentrale (TZ) und Schnittstellenbaugruppe (INT) einen weiteren Steuereingang (S2M ; S2T ; S2I) aufweisen, über den ein weiteres Steuersignal die Anordnung von Zwischenstellenbetrieb auf Endstellenbetrieb umstellt.

**Claim**

An arrangement for monitoring digital radio links comprising two end stations and at least one intermediate station (Z), arranged between these end stations, with a receiving section and a transmitting section, by means of additional bits whose arrangement is defined by a super-frame, and where, when the failure of a connection is established in an intermediate station, the super-frame is re-formed, all the information bits are set at the logic value 1 and the information bits are scrambled, and the failure of the connection is reported to the following intermediate stations by means of a service bit in the re-formed super-frame, characterised in that in the base-band preparation unit (BSZ) of the transmitting section of the intermediate station, which in the event of a fault assumes the function of a new end station, in the signal path between an input-end interface assembly (INT) and an output-end difference coder (COD) are interposed a multiplexer (MUX) for super-frame formation and a scrambler (SCR) which are connected to a clock central control (TZ) for the generation of a control clock signal for the super-frame formation, that the clock central control (TZ) is connected to a clock oscillator (OSZ) and the interface assembly (INT) and also to the coder (COD), that multiplexer (MUX) and scrambler (SCR) and clock central (TZ) possess a control input (S1M, S1T) for a control signal which occurs in the event of a failure, that an elastic store (ES) is interposed between the interface assembly (INT) and the multiplexer (MUX), which store controls a voltage-controlled oscillator (VCO) connected to the clock central control (TZ), and that multiplexer (MUX) and scrambler (SCR), clock central control (T2) and interface assembly (INT) possess a further control input (S2M, S2T, S2I) via which a further control signal switches over the arrangement from the intermediate station operation to end station operation.

**Revendication**

Dispositif pour contrôler des faisceaux hertziens numériques, comportant deux postes terminaux et au moins un poste intermédiaire (Z) disposé entre ces postes terminaux et possédant une partie réception et une partie émission, à l'aide de bits additionnels, dont la disposition est déterminée par une trame de rang supérieur, et dans lequel, lors de la défaillance de la liaison, détectée dans un poste intermédiaire, la trame de rang supérieur est à nouveau formée, tous les bits d'informations sont positionnés à la valeur logique 1, les bits d'informations sont brouillés et la défaillance de la liaison est signalée au poste intermédiaire suivant, à l'aide d'un bit de service présent dans la trame de rang supérieur nouvellement formée, caractérisé par le fait que dans le dispositif (BSZ) de préparation de la bande de base, que comporte la partie émission du poste intermédiaire qui, dans le cas d'une perturbation, assume la fonction d'un nouveau poste terminal, un multiplexeur (MUX) servant à former la trame de rang supérieur et un brouilleur (SCR) sont insérés dans la voie de transmission entre un module d'interface (INTERFACE) (INT) situé du côté entrée et un codeur de différence (COD) situé du côté sortie, le multiplexeur et le brouilleur étant reliés à un central (TZ) servant à délivrer une cadence de commande pour la formation de la trame de rang supérieur, que le central (TZ) délivrant la cadence est raccordé à un oscillateur (OSZ) fournissant la cadence et au module d'interface (INT) et est en outre relié au codeur (COD), que le multiplexeur (MUX) et le brouilleur (SCR) et le central (TZ) délivrant la cadence comportent une entrée de commande (S1M, S1T) pour un signal de commande appliqué dans le cas d'une défaillance, qu'entre le module d'interface (INT) et le multiplexeur (MUX) se trouve insérée une mémoire élastique (ES) qui commande un oscillateur (VCO) commandé par la tension et relié au central (TZ) délivrant la cadence, et qu'en outre le multiplexeur (MUX) et le brouilleur (SCR), le central (TZ) délivrant la cadence et le module d'interface (INT) comportent une autre entrée de commande (S2M ; S2T ; S2I), au moyen de laquelle un autre signal de commande commute le dispositif du fonctionnement en poste intermédiaire au fonctionnement en poste terminal.

# FIG 1

# FIG 2

# FIG 3

0 133 278